# EUROPEAN PATENT APPLICATION

(11) **EP 4 524 700 A1**
(43) Date of publication of application: **19.03.2025**
(21) Application number: 22944969.9
(22) Date of filing: 30.05.2022
(51) Int. Cl.: G06F 3/0482, G06F 3/0484, G06F 3/14

(54) **MULTIMEDIA DEVICE AND CONTROL METHOD THEREFOR**

(71) Applicant: LG Electronics Inc., Yeongdeungpo-gu Seoul 07336 (KR)
(72) Inventor: MIN, Sunki, Seoul 06772 (KR); LEE, Jaekyung, Seoul 06772 (KR); KIM, Taejoon, Seoul 06772 (KR)
(74) Representative: Schornack, Oliver
(86) International application number: PCT/KR2022/007673
(87) International publication number: WO 2023/234430

(57) **Abstract**

**ABSTRACT:** A control method for a multimedia device, according to an embodiment of the present invention, comprises the steps of: receiving a first command for executing a specific menu of the multimedia device at a first time point; displaying, according to the received first command, a specific menu formed in a first color; storing a use history of the multimedia device in a memory; receiving a second command for executing a specific menu of the multimedia device at a second time point; and displaying a specific menu formed in a second color, with reference to the received second command and the use history stored in the memory.

## Description

### TECHNICAL FIELD

The present disclosure relates to various multimedia devices (e.g., a television, a mobile phone, a tablet personal computer (PC), a laptop, a wearable device, or thee like). Particularly, embodiments of the present disclosure are applicable to any type of device capable of providing at least one menu and the like on a screen.

### BACKGROUND

With the increasing diversity of life today, manufacturers are making more efforts and attempts to appeal to emotional senses. For example, Apple's iPhone is credited with its success because it made a concerted effort to interpret technology emotionally, not just functionally.

According to conventional technology, research has focused on the hardware appearance designs of multimedia devices.

However, even if an arbitrary user likes the appearance design or color of a particular multimedia device at the time of initial purchase, there is a problem in that the multimedia device is not capable of reflecting a change in the user's design or color preference after the time of purchase.

### DISCLOSURE

### TECHNICAL PROBLEM

An embodiment of the present disclosure proposes a solution for changing the color of a menu in real time and adaptively, based on usage history information using any multimedia device.

Another embodiment of the present disclosure provides a process of automatically extracting a representative color when no representative color exists in a memory, in the course of implementing the above-described solution.

Another embodiment of the present disclosure provides a method of providing feedback information to a user according to the accuracy of an extracted representative color.

### TECHNICAL SOLUTION

A method of controlling a multimedia device according to an embodiment of the present disclosure includes receiving a first command for executing a specific menu of the multimedia device at a first time point, displaying the specific menu in a first color according to the received first command, storing a usage history of the multimedia device in a memory, receiving a second command for executing the specific menu of the multimedia device at a second time point, and displaying the specific menu in a second color by referring to the received second command and the usage history stored in the memory.

The method further includes, for example, analyzing at least one of a search history or a viewing history.

The method further includes, for example, when a condition that N or more searches are performed between the first time point and the second time point is satisfied as a result of analyzing the search history, extracting a representative keyword most frequently used in the searches.

The method further includes, for example, determining whether a representative color corresponding to the extracted representative keyword exists in the memory.

The method further includes, for example, when the representative color exists as a result of the determination, assigning the representative color as the second color. Herein, saturation of the second color is fixed to 100%.

The method further includes, for example, when the representative color does not exist as a result of the determination, performing web crawling based on the representative keyword, and assigning an average color of M or more detected top exposed images as the second color, as a result of performing the web crawling. Herein, saturation of the second color corresponds to a value less than 100% and is variable.

The multimedia device corresponds to, for example, at least one of a television, a mobile phone, a tablet PC, a laptop, or a wearable device.

When the multimedia device corresponds to a television, the specific menu is displayed together with a broadcast program.

A multimedia device according to an embodiment of the present disclosure includes a receiving module receiving a first command for executing a specific menu of the multimedia device at a first time point, a display displaying the specific menu in a first color according to the received first command, a memory storing a usage history of the multimedia device, and a controller controlling to display the specific menu in a second color by referring to a second command for executing the specific menu of the multimedia device at a second time point, and the usage history stored in the memory, when the second command is received.

### ADVANTAGEOUS EFFECTS

According to an embodiment of the present disclosure, there is a technical effect of providing a solution for changing the color of a menu in real time and adaptively, based on usage history information using any multimedia device.

According to another embodiment of the present disclosure, there is a technical effect of providing a process of automatically extracting a representative color when no representative color exists in a memory, in the course of implementing the above-described solution.

According to another embodiment of the present disclosure, there is a technical effect of providing feedback information to a user based on the accuracy of an extracted representative color.

The effects obtainable from the present disclosure are not limited to the effects described above, and other effects not described may be clearly understood by those skilled in the art to which the present disclosure belongs from the description below.

### BRIEF DESCRIPTION OF THE DRAWINGS

FIG. 1 illustrates components inside a television (TV) according to an embodiment of the present disclosure.
FIG. 2 illustrates components inside a TV in addition to an external device according to another embodiment of the present disclosure.
FIG. 3 is a diagram illustrating detailed components of a controller in a multimedia device according to an embodiment of the present disclosure.
FIG. 4 is a flowchart illustrating operations of some components 310 illustrated in FIG. 3 in a time series manner.
FIG. 5 is a flowchart illustrating operations of other components 320 illustrated in FIG. 3 in a time series manner.
FIG. 6 is a flowchart illustrating operations of other components 330 illustrated in FIG. 3 in a time series manner.
FIG. 7 illustrates a process of automatically setting a representative color for a menu through web crawling according to an embodiment of the present disclosure.
FIG. 8 illustrates a process of automatically setting a representative color for a menu based on the rating of a video according to an embodiment of the present disclosure.
FIG. 9 illustrates a process of automatically setting a representative color for a menu based on login information according to an embodiment of the present disclosure.
FIG. 10 illustrates a process of automatically setting a representative color for a menu based on login information according to another embodiment of the present disclosure.
FIG. 11 illustrates a process of additionally providing feedback information according to the accuracy of a set menu color according to an embodiment of the present disclosure.
FIG. 12 is a diagram illustrating saturation related to the feedback information illustrated in FIG. 11.
FIG. 13 is a diagram illustrating a memory storing representative colors corresponding to representative keywords according to an embodiment of the present disclosure.
FIG. 14 is a diagram illustrating a comparison between a case where keyword searches are accumulated and a case where they are not according to an embodiment of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context

Terms such as "include" or "has" are used herein and should be understood that they are intended to indicate an existence of several components, functions or steps, disclosed in the specification, and it is also understood that greater or fewer components, functions, or steps may likewise be utilized.

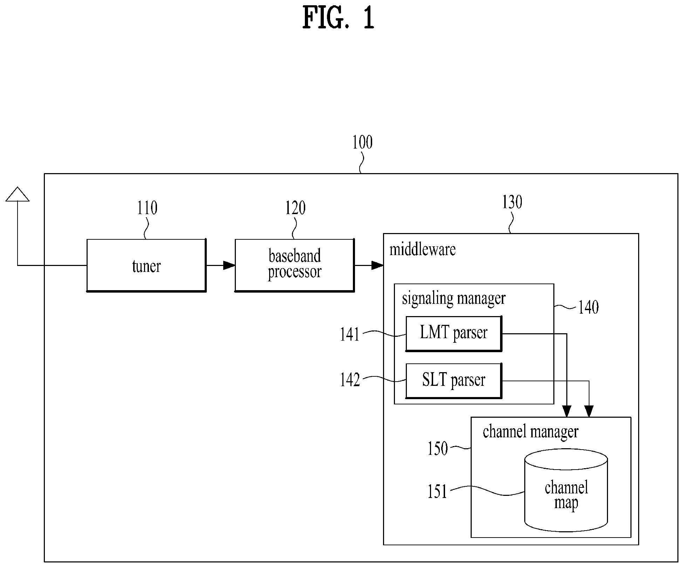

FIG. 1 is a diagram illustrating components inside a TV according to an embodiment of the present disclosure.

The present disclosure is applicable to various TV products, for example, the Digital Video Broadcasting (DVB) standard, which is a European standard, the Advanced Television Systems Committee (ATSC) 3.0 standard, which is a North American/Korean standard, etc.

In FIG. 1, a process for a TV 100 to perform and initial service scan operation in accordance with the ATSC 3.0 standard will be illustrated, but the scope of the rights of the present disclosure should be determined according to the matters described in the claims.

A tuner 110 determines whether a signal is present by using a predefined frequency list. If a signal is detected at a given frequency, a baseband processor 120 extracts L1 signaling of a preamble.

Furthermore, the baseband processor 120 transmits Physical Layer Pipe (PLP) data including link layer signaling and Low Level Signaling (LLS) to a middleware 130, and the middleware 130 may extract the link layer signaling and the LLS from the PLP data.

Meanwhile, the middleware 130 includes a signaling manager 140 and a channel manager 150.

The middleware 130 receives the PLP data including the link layer signaling and the LLS from the baseband processor 120 and passes the data to an appropriate parser.

For example, the middleware 130 extracts Link Mapping Table (LMT) from the link layer signaling and passes the LMT to an LMT parser 141. Furthermore, the middleware 130 extracts Service List Table (SLT) from the LLS and passes the SLT to an SLT parser 142.

The LMT parser 141 parses the LMT and extracts first information (e.g., PLPID, session information (IP address and port number), etc.) necessary to generate a channel map.

The SLT parser 142 parses the SLT and extracts second information (e.g., service id, service name, etc.) necessary to generate the channel map.

The extracted first information and second information are stored in a channel map 151.

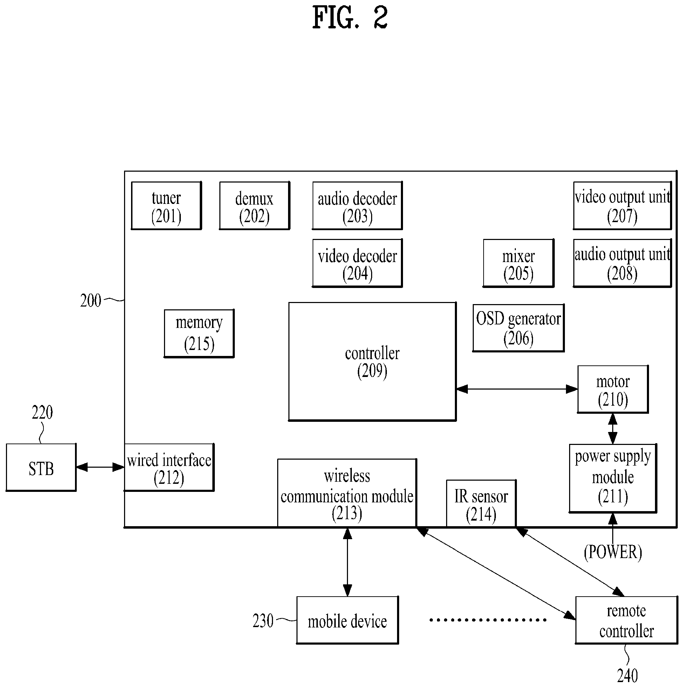

FIG. 2 shows components inside a TV and an external device according to another embodiment of the present disclosure. Those skilled in the art may implement the present disclosure by combining some components with reference to FIGS. 1 and 2. For example, the baseband processor 120 and the middleware 130 illustrated in FIG. 1 may be included in a controller 209 illustrated in FIG. 2.

Although a TV 200 illustrated in FIG. 2 includes various components, the scope of the rights of the present disclosure is not limited thereto and should be determined according to the matters described in the claims.

Moreover, the components inside the TV 200 illustrated in FIG. 2 may be controlled through the controller 209, and each of the components may be directly or indirectly connected thereto. That is, although not illustrated in FIG. 2, all of the components inside the TV 200 of FIG. 2 are designed to directly or indirectly transmit and receive control signals and/or data.

First, a tuner 201 receives a broadcast signal through an antenna or the like, and a demuxer (demux or demultiplexer) 202 demultiplexes audio data and video data included in the broadcast signal.

An audio decoder 203 decodes the audio data (in encoded state) included in the broadcast signal, and a video decoder 204 decodes the video data (in encoded state) included in the broadcast signal.

The decoded audio data is outputted through an audio output unit 207. The audio output unit 207 may be, for example, a speaker attached to or spaced apart from the TV 200.

Meanwhile, the decoded video data is directly outputted through a video output unit 208. Alternatively, a mixer 205 mixes menu data generated by an OSD generating unit 206 and the video data and then transmits the mixed menu data to the video output unit 208.

A memory 215 stores various control data and commands for controlling the TV 200, and the controller 209 may control all components in the TV with reference to the memory 215.

Furthermore, the TV 200 transmits and receives data through communication with various peripheral external devices. For example, video and audio data are received from an STB 220 via a wired interface 212, and then processed by the audio decoder 203 and the video decoder 204, respectively. Alternatively, the received video and audio data may be directly outputted through the audio output unit 207 and the video output unit 208 without passing through the decoders 203 and 204.

Various data is transmitted and received with a mobile device 230 (e.g., a mobile phone, a wearable device, etc.) via a wireless communication module 213, and an infrared (IR) signal of a remote controller 240 is received through an infrared sensor 214. Alternatively, the remote controller 240 capable of Bluetooth communication such as BT transmits and receives various data to and from the TV via the wireless communication module 213.

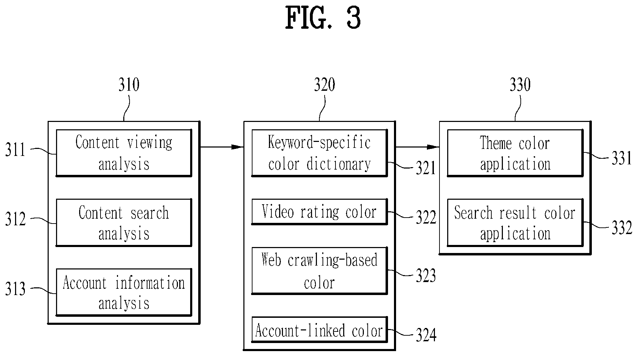

FIG. 3 is a diagram illustrating detailed components of a controller in a multimedia device according to an embodiment of the present disclosure.

The components illustrated in FIG. 3, which are detailed components of the controller 209 illustrated in FIG. 2, may be implemented as a single piece of hardware/software or separate pieces of hardware/software.

Some components 310 illustrated in FIG. 3 function to analyze the usability of a user using a multimedia device. A block 310 illustrated in FIG. 3 may be referred to as a usability analysis unit, and for example, the controller 209 illustrated in FIG. 2 performs the corresponding function.

Further, other components 320 illustrated in FIG. 3 function to analyze a representative color according to usability information about the user. A block 320 illustrated in FIG. 3 may be referred to as a color analysis unit, and for example, the controller 209 illustrated in FIG. 2 performs the corresponding function.

Other components 330 illustrated in FIG. 3 function to apply a representative color to any menu. A block 330 illustrated in FIG. 3 may be referred to as a color application unit, and for example, the controller 209 illustrated in FIG. 2 performs the corresponding function.

The usability analysis unit 310 additionally includes a content viewing analysis module 311, a content search analysis module 312, and an account information analysis module 313. The content viewing analysis module 311 analyzes information about channels, broadcast programs, and VOD content provided by a content provider (CP), which have been viewed by the user of the multimedia device. The content search analysis module 312 analyzes the results of searches (e.g., through a voice recognition function, a search application, or the like) by the user of the multimedia device. The account information analysis module 313 analyzes account information (e.g., a Google account or the like) logged in by the user of the multimedia device.

The color analysis unit 320 additionally includes a keyword-specific color module 321, a video rating color module 322, a web crawling-based color module 323, and an account-linked color module 324. The keyword-specific color module 321 builds and manages a database (DB) for keyword-specific color data. For example, the keyword-specific color module 321 stores information indicating that a color corresponding to a keyword "BTS" is purple and a color corresponding to a keyword "Im Young-Woong" is sky blue.

The video rating color module 322 stores video rating-specific color data and extracts color data to be used for a menu based on a rating extracted from metadata of current content of the multimedia device.

The web crawling-based color module 323 extracts a representative color value from a top exposed image detected by web crawling and uses it as a color of the menu.

The account-linked color module 324 analyzes color information about a profile used by an account logged in by the user of the multimedia device.

The color application unit 330 additionally includes a theme color application module 331 and a search result color application module 332.

The theme color application module 331 performs a function of applying a color analyzed by the color analysis unit 320 as a color of any menu. The search result color application module 332 is designed to additionally change the transparency, brightness, saturation, and so on of the color applied to the menu according to a search accuracy.

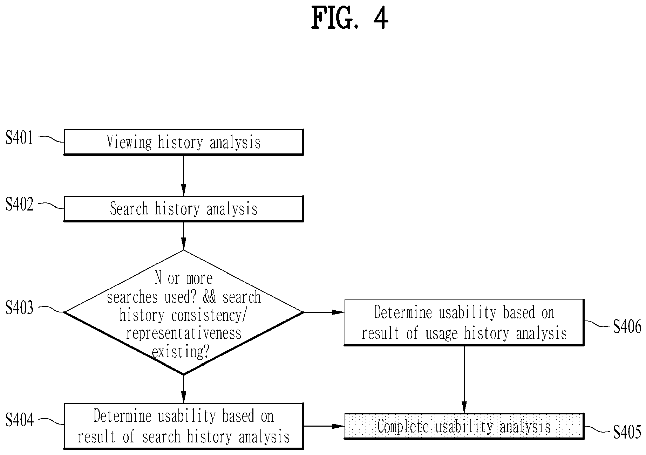

A more specific operation of the usability analysis unit 310 illustrated in FIG. 3 will be described below in detail with reference to FIG. 4.

FIG. 4 is a flowchart illustrating operations of the components 310 illustrated in FIG. 3 in a time series manner. Obviously, the operations illustrated in FIG. 4 may be implemented in the controller of the multimedia device.

The multimedia device according to an embodiment of the present disclosure analyzes a viewing history of channels, broadcast programs, contents, and so on that the user has viewed (S401). For example, the multimedia device extracts user-preferred keywords (e.g., cast information, and so on) from electronic program guide (EPG) information or the like of a broadcast program.

Further, the multimedia device analyzes a content history searched by the user (e.g., through a voice recognition function, a search application, or the like) (S402). Performing steps S401 and S402 illustrated in FIG. 4 simultaneously or reversely also fall into the scope of the present disclosure.

In addition, the multimedia device according to an embodiment of the present disclosure is designed to determine whether N (N is a natural number) or more searches have been performed in step S402 and extract a most frequently used keyword (S403).

When N or more searches have not been performed in step S403, usability is determined based on the result of analyzing the viewing history in step S401 (S406).

On the contrary, when N or more searches have been performed in step S403, the usability is determined based on the most frequently used keyword in the searches (S404).

That is, in step S403, it is determined whether to extract a representative keyword based on the result of analyzing the viewing history in step S401 or the result of analyzing the search history in step S402, based on the number of searches. The technical effect of reducing the error of analyzing the user's usability (preference) with only one search by the user is expected from this design.

In addition, the multimedia device according to an embodiment of the present disclosure is designed to complete the usability analysis (S405).

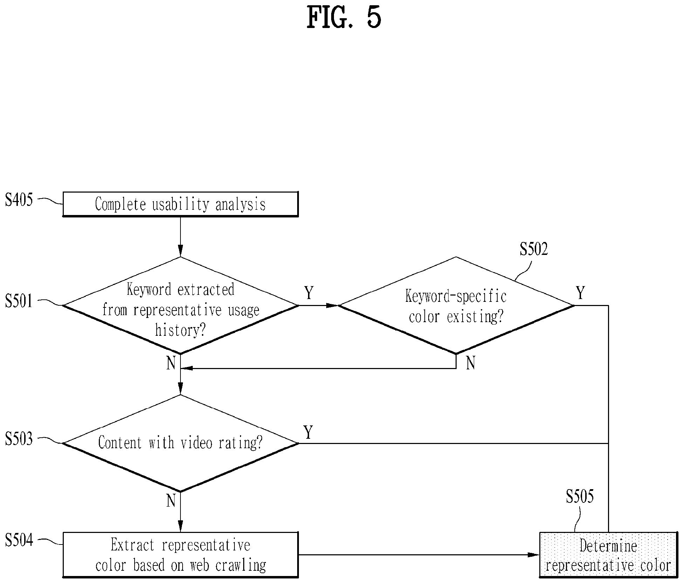

FIG. 5 is a flowchart illustrating operations of the components 320 illustrated in FIG. 3 in a time series manner. Obviously, the operations illustrated in FIG. 5 may be implemented in the controller of the multimedia device. Although FIG. 5 is based on the assumption that all the steps of FIG. 4 have been completed, it is also applicable to a case where only some of the steps of FIG. 4 have been completed.

First, the multimedia device according to an embodiment of the present disclosure determines whether a representative keyword is extractable based on the result of the usability analysis in step S401 or step S402 (S501). For example, when a specific keyword is used 50% or higher out of all extracted keywords, it may be considered as a representative keyword.

When a representative keyword is extractable as a result of the above determination (S501), the multimedia device according to an embodiment of the present disclosure additionally determines whether information about a specific color corresponding to the representative keyword is stored in the memory (S502).

When the information about the specific color corresponding to the representative keyword is stored as a result of the determination (S502), the multimedia device determines the specific color as a color to be applied to a menu (S505).

On the contrary, when a representative keyword is not extractable as a result of the determination (S501), the multimedia device according to an embodiment of the present disclosure determines whether content (a broadcast program) currently being viewed includes video rating information (S503).

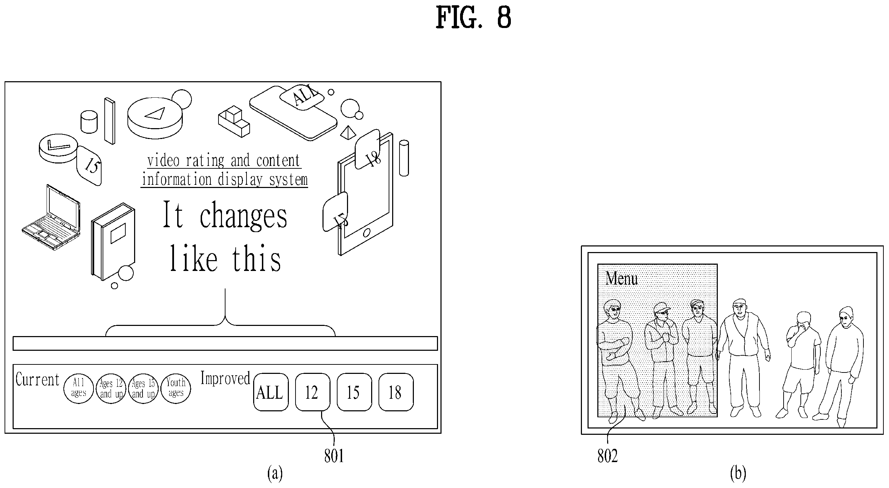

When the video rating information is included as a result of the determination (S503), a color of an indicator (e.g., rated 15+) that displays a video rating on a screen is determined as the color to be applied to the menu (S505). A more specific example related to this will be described in more detail later with reference to FIG. 8.

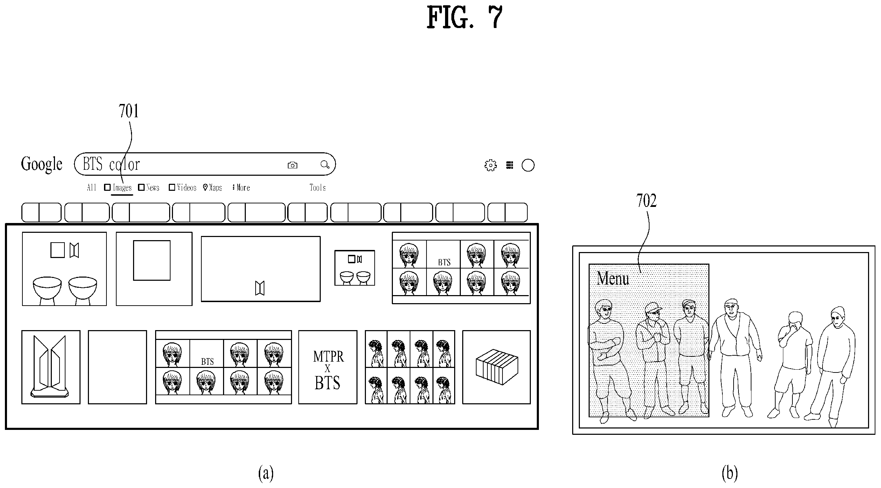

On the contrary, when the video rating information is not included as a result of the determination (S503), a representative color is designed to be extracted based on web crawling for the most frequently used keyword by the user (S504). A more specific embodiment related to this will be described in more detail later with reference to FIG. 7.

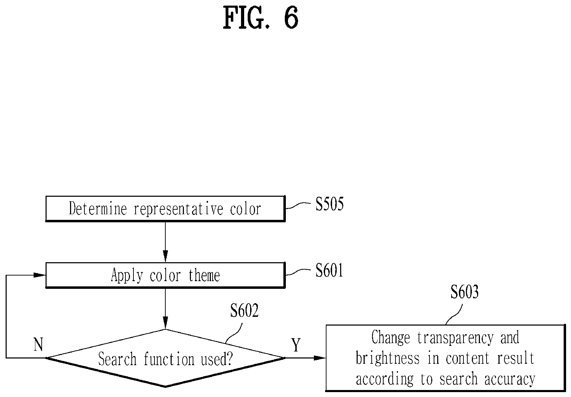

FIG. 6 is a flowchart illustrating operations of the components 330 illustrated in FIG. 3 in a time series manner. Obviously, the operations illustrated in FIG. 6 may be implemented in the controller of the multimedia device. Although FIG. 6 is based on the assumption that all the steps of FIG. 5 have been completed, it is also applicable to a case where only some of the steps of FIG. 5 have been completed.

First, it is assumed that the most frequently used keyword of the user using the multimedia device and the representative color have been determined (S505) according to any one of the foregoing embodiments.

Further, the multimedia device according to an embodiment of the present disclosure applies the determined representative color as a theme color for the multimedia device (S601).

In the specification, applying as a theme color means applying the same color to at least one menu provided by the multimedia device.

More specifically, for example, when red is determined as the representative color, red is applied as the overall color of all menus provided by the multimedia device or only to border lines of all menus.

Alternatively, red is applied as the overall color of a specific menu provided by the multimedia device or only to a border line of the specific menu.

Even after step S601, the multimedia device according to an embodiment of the present disclosure determines whether a search function has been additionally used (S602).

When the search function has not been additionally used as a result of the determination (S602), the multimedia device according to an embodiment of the present disclosure uses the color already applied to the menu without changing it (S601).

On the contrary, when the search function has been additionally used as a result of the determination (S602), the multimedia device according to an embodiment of the present disclosure is designed to additionally change at least one of the transparency, brightness, or saturation of the color already applied to the menu based on search history information after step S601 (S603).

For example, as the number of searches for the specific keyword increases, the saturation of the color applied to the menu is designed to increase in proportion to the search number, thereby advantageously providing a feedback to the user.

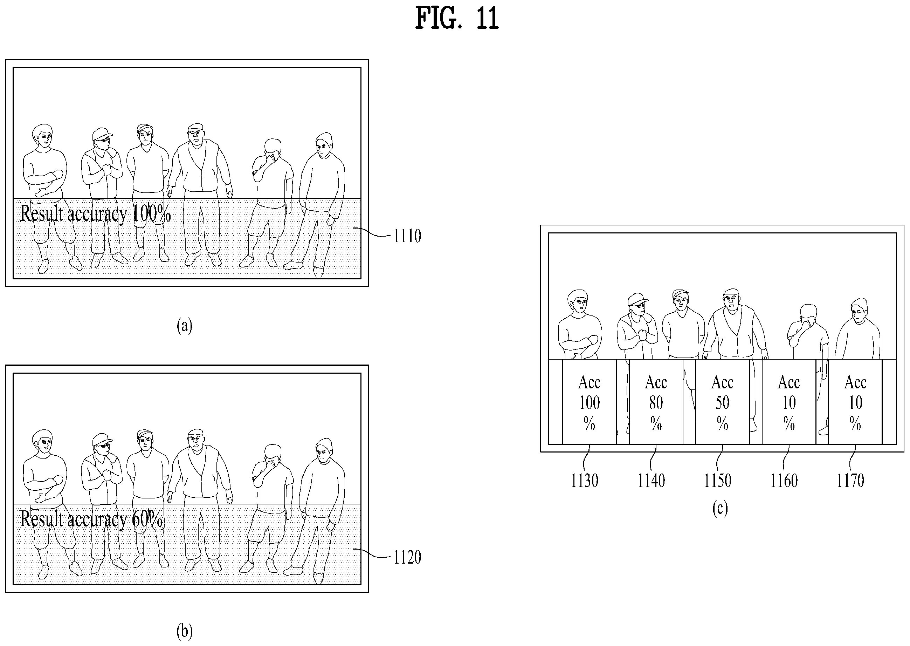

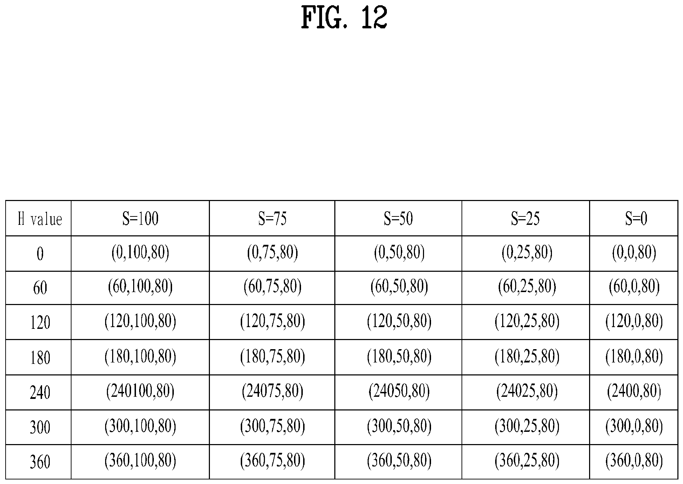

An embodiment related to this will be described in more detail later with reference to FIGS. 11 and 12.

In summary of the foregoing embodiments, the multimedia device according to an embodiment of the present disclosure analyzes a content viewing history and a search history. Then, the multimedia device extracts a specific color corresponding to a specific keyword based on a result of the analysis. Finally, the multimedia device automatically applies the extracted specific color to a menu.

In order to implement this, for example, the multimedia device according to an embodiment of the present disclosure is designed to store information as a representative color corresponding to an extracted keyword (e.g., the representative color corresponding to the keyword BTS as purple, the representative color corresponding to the keyword Im Young-Woong as mint, and so on) in the memory.

Further, the multimedia device according to an embodiment of the present disclosure may also provide a different menu depending on the age and gender of the user of the multimedia device, or provide a menu in a different color based on login information.

In addition, the multimedia device according to an embodiment of the present disclosure may be designed to set a different color, theme, contrast, transparency, and so on for a menu depending on weather information (e.g., cloudy/sunny and so on).

FIG. 7 illustrates a process of automatically setting a representative color for a menu through web crawling according to an embodiment of the present disclosure.

As described before with reference to FIG. 4, it has been described that a representative keyword (e.g., a most frequently used keyword) is extractable through the viewing history analysis (S401) or the search history analysis (S402) of the multimedia device.

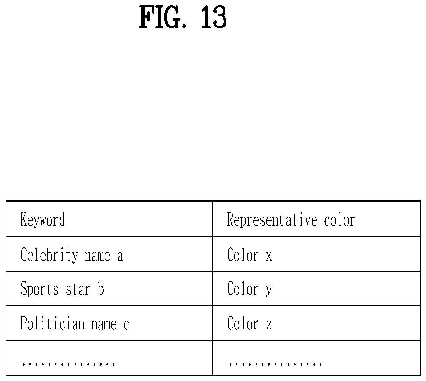

When a representative color corresponding to the extracted representative keyword is stored in the memory of the multimedia device (a related embodiment will be described later with reference to FIG. 13), it is possible to immediately apply the representative color stored in the memory to the menu.

However, when information about the representative color corresponding to the extracted representative keyword is not stored in the memory, a separate solution is required to solve this, and a related embodiment will be described with reference to FIG. 7.

A color and theme matching a specific keyword searched for frequently within a specific period are designed to be calculated by the multimedia device or a server and then automatically applied to at least one menu or the like.

In FIG. 7, it is assumed that the user of the multimedia device has used the keyword "BTS" most. However, as a result of the multimedia device referencing the internal memory, information about the representative color corresponding to the keyword BTS is not stored.

In this case, the multimedia device according to an embodiment of the present disclosure may estimate that a representative image corresponding to the keyword BTS is in purple through web crawling, as illustrated in (a) of FIG. 7.

Web crawling means an act of automatically searching data existing on the Internet, and some persons skilled in the art may express the act as spidering rather than web crawling.

The multimedia device according to an embodiment of the present disclosure is designed to, when displaying an arbitrary menu 702 as illustrated in (b) of FIG. 7, display the menu in purple, which is the representative color extracted through web crawling in (a) of FIG. 7.

FIG. 8 illustrates a process of automatically setting a representative color for a menu based on the rating of a video according to an embodiment of the present disclosure. Although not necessarily limited, a process in the case where it is impossible to estimate a representative color corresponding to a keyword even through web crawling or spidering of FIG. 7 will be described below in detail with reference to FIG. 8.

As illustrated in (a) of FIG. 8, for a video (e.g., a broadcast program or the like), an age group suitable for viewing the video and a representative color indicating the age group (age rating) are set depending on its content.

For example, a rating permitting all viewers without age restrictions is expressed as a green square box, a rating permitting only viewers who are 12 years old or above is expressed as a yellow square box, a rating permitting only viewers who are 15 years old or above is expressed as an orange square box, and a rating permitting only viewers who are 18 years old or above is expressed as a red square box.

It is assumed that the multimedia device according to an embodiment of the present disclosure is currently displaying a broadcast program rated age 12 or up (801).

In this case, when a command to start any menu is received, a menu 802 of the same color as a representative color indicating the current video rating is designed to be displayed, as illustrated in (b) of FIG. 8.

This design advantageously obviates the need for always displaying an indicator including a number indicating a video rating on an upper right end of a screen, unlike the conventional technology. Further, since the size of a menu is large relative to a small indicator based on the conventional technology, it is expected that a warning effect may be more clearly conveyed to the user.

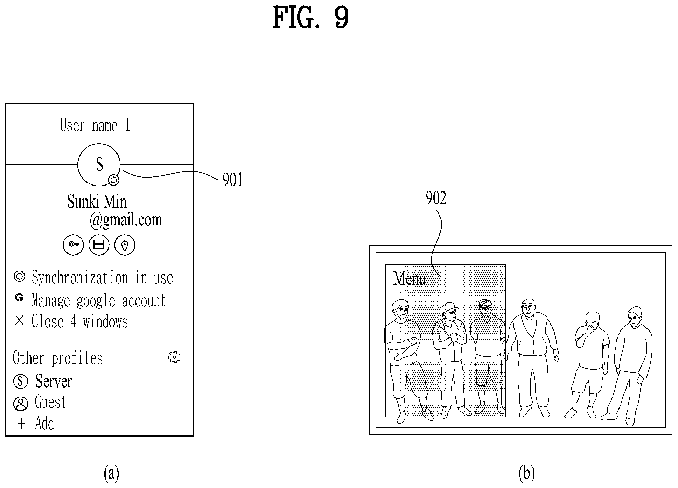

FIG. 9 illustrates a process of automatically setting a representative color for a menu based on login information according to an embodiment of the present disclosure.

The foregoing embodiments are technologies for automatically changing the color of a menu based on usage history information of the corresponding multimedia device. On the other hand, the color of a menu may be changed based on linkage to another device, login information, or the like in the embodiment illustrated in FIG. 9.

As illustrated in (a) of FIG. 9, it is assumed that a user using a mobile device has logged in to a website (e.g., Google or the like). Then, it is assumed that a specific color (e.g., yellow) has been set for an image 901 indicating an account that the user has logged in.

Further, when the user has logged in to the same website through a device other than the mobile device, a menu 902 on the other device is also displayed in yellow, as illustrated in (b) of FIG. 9.

That is, according to the embodiment illustrated in FIG. 9, a color that may symbolize an individual is applied based on a thumbnail color and image of an account logged in to use the device.

Since it is based on the logged-in account, the user is expected to view a consistent menu, UI, and so on in a unified color on all devices (e.g., a mobile device, a TV, and so on).

When the user does not select an image when creating an account, a default color is applied. On the other hand, when the user uploads an image (e.g., a photo of the user's face or the like) during creation of an account, an average color value of the photo is automatically set as a representative color to be applied to a menu.

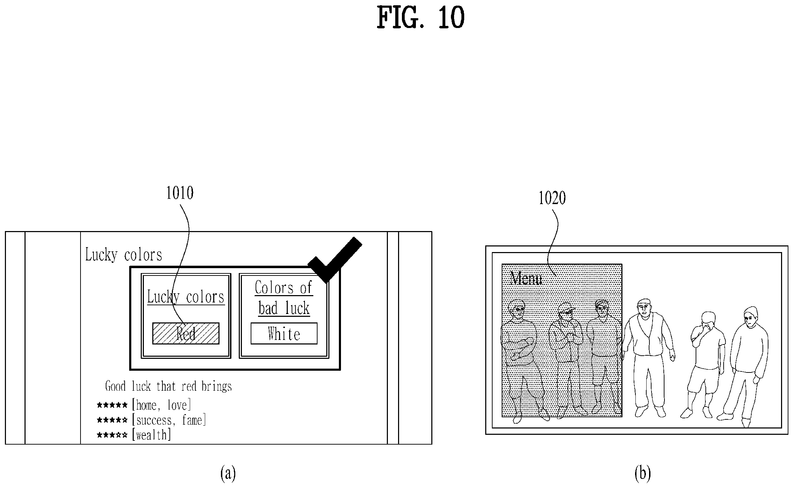

FIG. 10 illustrates a process of automatically setting a representative color for a menu based on login information according to another embodiment of the present disclosure.

When the user enters login information to sign up for a website, the user enters the date of birth and so on in some cases.

As illustrated in (a) of FIG. 10, the multimedia device according to an embodiment of the present disclosure may extract a lucky color 1010 (e.g., red) of the logged-in user based on the login information (e.g., date of birth information).

When the user executes any menu, the multimedia device according to an embodiment of the present disclosure is designed to display a menu 1020 to which red extracted as the lucky color is applied, as illustrated in (b) of FIG. 10.

FIG. 11 illustrates a process of additionally providing feedback information according to the accuracy of a set menu color according to an embodiment of the present disclosure.

The foregoing embodiments have been described based on the assumption that there is no change to a color after it has been determined as a representative color. In contrast, the embodiment illustrated in FIG. 11 has the advantage of reflecting a user feedback in real time by continuously changing the saturation and so on of a representative color, considering the accuracy of the process of determining the representative color.

For example, the embodiment illustrated in (a) of FIG. 11 is based on the assumption that representative color information corresponding to any keyword (derived as a result of usability analysis) is stored in the memory of the multimedia device. Therefore, the multimedia device displays a menu 1110 in the representative color stored in the memory, and in this case, since the accuracy is 100%, there is no need to cause any change in the color set for the menu 1110.

On the contrary, the embodiment illustrated in (b) of FIG. 11 is based on the assumption that representative color information corresponding to any keyword (derived as a result of usability analysis) is not stored in the memory of the multimedia device, and thus the representative color is estimated using web crawling or the like. Therefore, the multimedia device displays a menu 1120 with saturation adjusted for the corresponding color. For example, it provides a feedback indicating that color information about the menu reflecting the user's usability may not be 100% accurate by lowering the saturation.

Further, as illustrated in (c) of FIG. 11, a menu with an adjusted saturation value is displayed according to the accuracy of representative color information corresponding to a keyword frequently used by the user.

For example, when the accuracy of representative color information corresponding to a keyword is 100%, a menu 1130 with a saturation value S of 100% is displayed.

When the accuracy of representative color information corresponding to a keyword is 80%, a menu 1140 with a saturation value of 80% is displayed. Further, when the accuracy of representative color information corresponding to a keyword is 50%, a menu 1150 with a saturation value S of 50% is displayed. Further, when the accuracy of representative color information corresponding to a keyword is 10%, a menu 1160 with a saturation value S of 10% is displayed. Further, when the accuracy of representative color information corresponding to a keyword is 5%, a menu 1170 with a saturation value S of 5% is displayed. A more detailed description will be given below in relation to the saturation with reference to FIG. 12.

FIG. 12 is a diagram illustrating saturation related to the feedback information illustrated in FIG. 11. While an embodiment in which saturation may be changed according to the accuracy of representative color information corresponding to a keyword is described with reference to FIGS. 11 and 12, changing transparency or contrast instead of saturation also falls into the scope of the present disclosure. For example, when the accuracy of color information corresponding to a specific keyword is not high, the transparency or contrast of the color of a menu is designed to be increased in inverse proportion to the accuracy, which provides a technical effect of visually indicating that the color applied to the menu may not 100% satisfy the user's needs.

Saturation is one of the three main properties of color along with hue and value. As a color is more vibrant, this means that the color has higher saturation, and as the color is closer to an achromatic color such as gray, white, or black, this means that the color has lower saturation.

In (X, Y, Z) coordinates illustrated in FIG. 12, an X value means hue, a Y value means saturation, and a Z value means value. Particularly, FIG. 12 is based on the assumption that the brightness value is fixed to 80. When a color has a saturation value S of 0, it is achromatic.

That is, the multimedia device according to an embodiment of the present disclosure is designed to display a menu with a saturation value S adjusted according to the accuracy of representative color information, even when the representative color information is determined.

FIG. 13 is a diagram illustrating a memory that stores representative colors corresponding to representative keywords according to an embodiment of the present disclosure.

As described above, the multimedia device according to an embodiment of the present disclosure extracts, for example, a keyword most frequently used by the user as a result of usability analysis.

Referring to the memory (internal or external server of the multimedia device or the like) illustrated in FIG. 13, the multimedia device detects representative color information corresponding to the extracted keyword. Finally, the multimedia device according to an embodiment of the present disclosure displays any menu in the detected representative color.

In this case, since there is no possibility of an error in the keyword and representative color matching process, the saturation value S is fixed to 100%. In contrast, when representative color information does not exist in the memory and thus a representative color for the keyword is estimated by web crawling, the saturation value of the color applied to the menu is set to be less than 100%, and is variable depending on the accuracy.

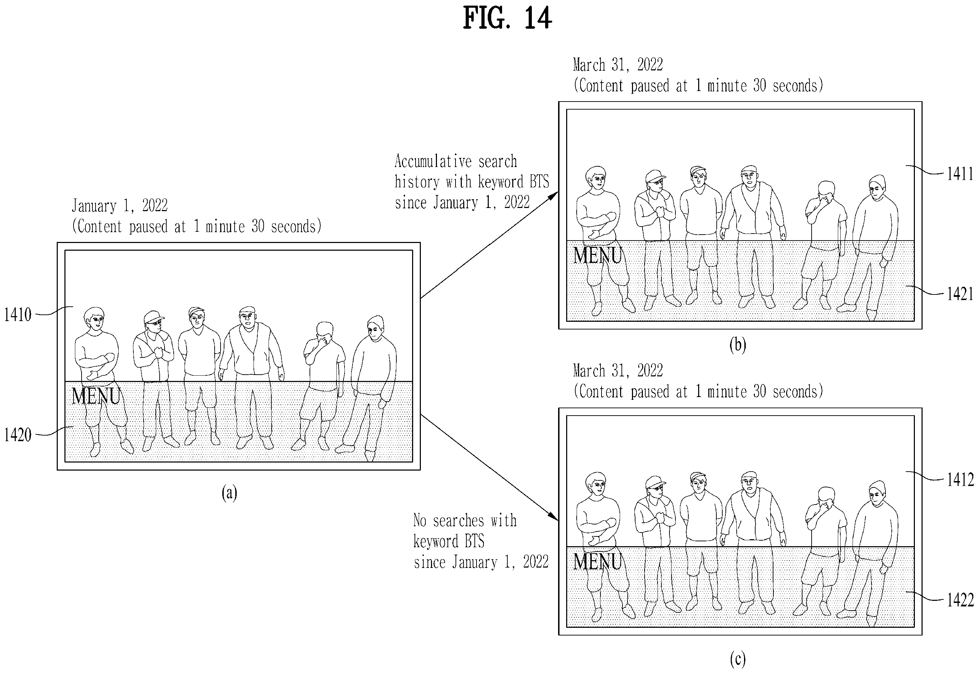

FIG. 14 is a diagram illustrating a comparison between a case where keyword searches are accumulated and a case where they are not according to an embodiment of the present disclosure.

When the above-described multimedia device corresponds to a TV, a menu is displayed together with a broadcast program.

However, the multimedia device according to an embodiment of the present disclosure may also display any content (e.g., a VOD or the like) in addition to a broadcast program received in real time. In this case, the multimedia device displays a video 1410 of the content on a full screen and a menu 1420 on a portion of the screen, as illustrated in (a) of FIG. 14. Since the representative color corresponding to the keyword searched for most by the user is red, it is assumed that the color of the menu 1420 illustrated in (a) of FIG. 14 is red. In addition, it is assumed that the video 1410 displayed on the full screen corresponds to a VOD and is paused at a play time of 1 minute 30 seconds.

A scenario in which the user searches for other keywords using the multimedia device ((b) of FIG. 14) and a scenario in which the user does not ((c) of FIG. 14), after January 1, 2022 corresponding to (a) of FIG. 14 will be described separately.

As illustrated in (b) of FIG. 14, it is assumed that the same video content 1411 illustrated in (a) of FIG. 14 is paused at the play time of 1 minute 30 seconds. Therefore, the color of the video content 1410 illustrated in (a) of FIG. 14 and the color of video content 1411 illustrated in (b) of FIG. 14 are the same.

However, the color of a menu 1421 illustrated in (b) of FIG. 14 and the color of the menu 1420 illustrated in (a) of FIG. 14 are different. Because the user using the multimedia device searched for a different keyword (e.g., BTS) most between January 1, 2022 and March 31, 2022, the menu 1421 is automatically changed to purple, which is the representative color corresponding to the keyword BTS.

As illustrated in (c) of FIG. 14, it is assumed that the same video content 1412 illustrated in (a) of FIG. 14 is paused at the play time of 1 minute 30 seconds. Therefore, the color of the video content 1410 illustrated in (a) of FIG. 14 and the color of the video content 1412 illustrated in (c) of FIG. 14 are the same.

Compared to (b) of FIG. 14, the color of a menu 1422 illustrated in (c) of FIG. 14 is the same as the color of the menu 1420 illustrated in (a) of FIG. 14. This is because the user using the multimedia device did not search for another keyword between January 1, 2022 and March 31, 2022.

In summary of the foregoing embodiments again, the multimedia device according to an embodiment of the present disclosure receives a first command for executing a specific menu at a first time point, and displays the specific menu in a first color according to the received first command.

The multimedia device according to an embodiment of the present disclosure stores a usage history in the memory (e.g., FIG. 13 or the like).

When receiving a second command for executing the specific menu at a second time point, the multimedia device displays the specific menu in a second color by referring to the received second command and the usage history stored in the memory.

Particularly, although the same menu is displayed at the first time point and the second point, the first color at the first time point and the second color at the second time point are different from each other even for the same menu (particularly, according to usage history information about the multimedia device), as described above.

As described before with reference to FIG. 4, the multimedia device according to an embodiment of the present disclosure is designed to analyze at least one of a search history or a viewing history.

When a result of analyzing the search history satisfies a condition that N (a natural number) or more searches have been performed between the first time point and the second time point, the multimedia device according to an embodiment of the present disclosure extracts a most frequently used representative keyword in the searches.

Further, the multimedia device determines whether a representative color corresponding to the extracted representative keyword exists in the memory.

When the representative color exists as a result of the determination, the multimedia device is designed to assign the representative color as the second color. In this case, since there is no possibility of an error, saturation of the second color is fixed to 100%.

On the contrary, when the representative color does not exist as a result of the determination, the multimedia device performs web crawling based on the representative keyword, and assigns an average color of M (a natural number) or more top exposed images detected as a result of the web crawling as the second color. In this case, however, since the accuracy is relatively low, the saturation of the second color is set to a value less than 100%, and may be changed according to accuracy information.

This will be described with reference to FIG. 2. The multimedia device 200 controlled by the remote control 240 includes a receiving module (the infrared sensor 214 or the wireless communication module 213 illustrated in FIG. 2) receiving a first command for executing a specific menu of the multimedia device at a first time point, a display (the video output unit 208 illustrated in FIG. 2) displaying the specific menu in a first color according to the received first command, a memory (the memory 215 illustrated in FIG. 2) storing a usage history of the multimedia device, and a controller (the controller 209 illustrated in FIG. 2) that when receiving a second command for executing the specific menu of the multimedia device at a second time point, controls to display the specific menu in a second color by referring to the received second command and the usage history stored in the memory.

The present disclosure described above may be implemented as a computer-readable code on a medium in which a program is recorded. Computer-readable media includes any type of recording device that stores data to be read by a computer system. Examples of computer-readable media include hard disk drives (HDDs), solid state disks (SSDs), silicon disk drives (SDDs), ROMs, RAMs, CD-ROMs, magnetic tapes, floppy disks, optical data storage devices, and also those implemented in the form of carrier waves (e.g., transmitted over the Internet). The computer may include a controller. Accordingly, the detailed description should not be construed as restrictive in all respects but should be considered illustrative. The scope of the present disclosure should be determined by a reasonable interpretation of the appended claims, and all changes within the equivalent scope of the present disclosure are intended to be included within the scope of the present disclosure.

### MODE FOR INVENTION

Various embodiments of the present disclosure have been described in "Best Mode " which is the previous content, and it should be appreciated to combine the embodiments described in two or more figures by those skilled in the art as needed belongs to the scope of the present disclosure.

### INDUSTRIAL APPLICABILITY

The present disclosure is applicable to any type of multimedia device (e.g., television, mobile phone, tablet PC, laptop, or wearable device) that provides a menu, and thus its industrial applicability is acknowledged.

## Claims

1. A method of controlling a multimedia device, comprising:
receiving a first command for executing a specific menu of the multimedia device at a first time point;
displaying the specific menu in a first color according to the received first command;
storing a usage history of the multimedia device in a memory;
receiving a second command for executing the specific menu of the multimedia device at a second time point; and
displaying the specific menu in a second color by referring to the received second command and the usage history stored in the memory,
wherein the first color and the second color are different from each other.

2. The method of claim 1, further comprising analyzing at least one of a search history or a viewing history.

3. The method of claim 2, further comprising, when a condition that N or more searches are performed between the first time point and the second time point is satisfied as a result of analyzing the search history, extracting a representative keyword most frequently used in the searches.

4. The method of claim 3, further comprising determining whether a representative color corresponding to the extracted representative keyword exists in the memory.

5. The method of claim 4, further comprising, when the representative color exists as a result of the determination, assigning the representative color as the second color.

6. The method of claim 4, further comprising:
when the representative color does not exist as a result of the determination, performing web crawling based on the representative keyword; and
assigning an average color of M or more detected top exposed images as the second color, as a result of performing the web crawling.

7. The method of claim 5, wherein saturation of the second color is fixed to 100%.

8. The method of claim 6, wherein saturation of the second color corresponds to a value less than 100% and is variable.

9. The method of claim 1, wherein the multimedia device corresponds to at least one of a television, a mobile phone, a tablet PC, a laptop, or a wearable device.

10. The method of claim 9, wherein when the multimedia device corresponds to a television, the specific menu is displayed together with a broadcast program.

11. A multimedia device controlled by a remote control, comprising:
a receiving module receiving a first command for executing a specific menu of the multimedia device at a first time point;
a display displaying the specific menu in a first color according to the received first command;
a memory storing a usage history of the multimedia device; and
a controller controlling to display the specific menu in a second color by referring to a second command for executing the specific menu of the multimedia device at a second time point, and the usage history stored in the memory, when the second command is received,
wherein the first color and the second color are different from each other.

12. The multimedia device of claim 11, wherein the controller analyzes at least one of a search history or a viewing history.

13. The multimedia device of claim 12, wherein when a condition that N or more searches are performed between the first time point and the second time point is satisfied as a result of analyzing the search history, the controller extracts a representative keyword most frequently used in the searches.

14. The multimedia device of claim 13, wherein the controller determines whether a representative color corresponding to the extracted representative keyword exists in the memory.

15. The multimedia device of claim 14, wherein when the representative color exists as a result of the determination, the controller assigns the representative color as the second color.

16. The multimedia device of claim 14, wherein when the representative color does not exist as a result of the determination, the controller performs web crawling based on the representative keyword, and assigns an average color of M or more detected top exposed images as the second color, as a result of performing the web crawling.

17. The multimedia device of claim 15, wherein saturation of the second color is fixed to 100%.

18. The multimedia device of claim 16, wherein saturation of the second color corresponds to a value less than 100% and is variable.

19. The multimedia device of claim 11, wherein the display displays a video of content on a full screen, and displays the specific menu on a portion of the screen.

20. The multimedia device of claim 19, wherein a color of the video of the content is fixed at a specific paused time point, and
wherein the color of the specific menu is changed based on the usage history stored in the memory.
